# EUROPEAN PATENT SPECIFICATION

(11) **EP 2 652 356 B1**
(45) Date of publication and mention of the grant of the patent: **16.03.2016**
(21) Application number: 11808380.7
(22) Date of filing: 16.12.2011
(51) Int. Cl.: F16G 5/16

(54) **FLEXIBLE METAL RING WITH A SURFACE PROFILE AND DRIVE BELT COMPRISING A LAMINATED SET OF SUCH RINGS**
BIEGSAMER METALLRING MIT EINEM OBERFLÄCHENPROFIL UND TREIBRIEMEN MIT EINEM LAMINIERTEN SET AUS SOLCHEN RINGEN
ANNEAU MÉTALLIQUE SOUPLE DOTÉ D'UN PROFIL DE SURFACE ET COURROIE D'ENTRAÎNEMENT COMPRENANT UN ENSEMBLE STRATIFIÉ DE TELS ANNEAUX

(30) Priority: 17.12.2010 NL 1038462
(43) Date of publication of application: 23.10.2013
(73) Proprietor: Robert Bosch GmbH, 70442 Stuttgart (DE)
(72) Inventor: DELADI, Elena Loredana, NL-5508 MZ Veldhoven (NL)
(74) Representative: Plevier, Gabriel Anton Johan Maria
(86) International application number: PCT/NL2011/000081
(87) International publication number: WO 2012/081974

(56) References cited:
- WO-A1-2006/057547
- JP-U- 64 027 553

## Description

The present invention relates to a flexible metal ring that is provided with a surface profile and a drive belt wherein such is utilised. One well known type of drive belt is described in EP-A-1 371 876 A and is also referred to in the art as the pushbelt. The known drive belt includes a multitude of metal, typically carbon steel segments that are provided with at least one, but typically two recesses, each such recess accommodating a set of a number of mutually, concentrically nested, i.e. laminated flexible metal, typically maraging steel rings of the drive belt. The metal segments are not connected to the laminated set of rings, but rather can slide along the circumference thereof. Also the individual rings of the laminated set of rings can slide relative to one another.

In the art, the drive belt's segments are also referred as transverse elements, the drive belt's rings as annular or endless bands and the laminated set of rings of the drive belt as endless tensile means or endless carrier. The present type of drive belt is typically applied in the well-known pulley-type continuously variable transmission or CVT for motor vehicles. In this application, typical dimensions of the drive belt are an axial width of 24 mm or 30 mm and a peripheral dimension in the range from 500 mm to 1000 mm, whereas the ring typically has a radial thickness of approximately 185 µm and an axial width in the range from 5 mm to 25 mm.

At least one of the radially inward and radially outward oriented main faces of the known ring, i.e. the inner and/or the outer peripheral surface thereof, is provided with a surface profile in the form of a pattern of mutually intersecting protruding parts or ridges. The ridges of the known surface profile are oriented at an acute angle with respect to the peripheral direction of the ring. Between the ridges a plurality of lower lying, isolated depressions or cavities are formed on the said main face. The said cavities allow for the accommodation of lubrication fluid, i.e. oil, that is typically applied in the CVT. In this known surface profile the cavities make up around 56% of the total, radially oriented surface area of the ring.

Further examples of known surface profiles for are provided by EP-A-0 014 014, JP64027553 and JP2003-240060 A. These latter known ring surface profiles are constituted by a pattern of mutually intersecting gullies, where between a plurality of higher lying, isolated peaks or protrusions are formed.

Although the known drive belt performs quite well and can be operated in the CVT at a comparatively high efficiency, it is also true that belt-internal energy losses occur, amongst others as a result of friction between the pairs of consecutive, i.e. adjoining rings in the endless carrier. It is an object of the present invention to further improve the efficiency of the drive belt and in particular to reduce the friction between the said rings.

In accordance with the invention and for realising the said object, a main face of the rings is provided with a surface profile of isolated cavities defined between a continuous higher lying part that protrudes in radial direction relative to the cavities and whereof the cavities make-up between 5% and 30%, preferably between 10% and 20% of the radially oriented surface area of the main face of the ring wherein the cavities are provided. As a result, oil and possibly also wear particles can still be accumulated in the cavities of the surface profile, however, in particular in comparison with the known art, a large part of the surface area of the main face is available for contacting an adjoining ring in the endless carrier. According to the invention, this feature was found to favourably reduce the friction between the rings and in some cases to even reduce the wear of the profile, hence improving the durability of the drive belt.

In more detailed embodiment of the surface profile in accordance with the invention, a dimension of an individual cavity in the peripheral direction of the ring preferably has a value in the range from 25 µm to 250 µm, more preferably in the range from 50 µm to 150 µm. Still further, a depth, i.e. a dimension of an individual cavity in the radial direction of the ring relative to the higher lying surface part, i.e. a depth of the cavity, preferably has a value in the range from 2.5 µm to 25 µm, more preferably has a value in the range from 4.5 µm to 10 µm.

According to the invention, a cavity may be created in the surface of a ring by locally deforming (e.g. depressing) or removing ring material, at least relative to parts of the ring surface that surround such cavities, which latter parts thus become relatively higher lying ridges available for direct, i.e. physical contact with an adjoining ring in the carrier. In a favoured process for forming the cavities, these are formed by evaporating ring material by means of a focussed beam of high energy electro-magnetic radiation, such as is emitted by a laser.

In an alternative embodiment of the invention that has the same advantage as the above embodiments thereof and that is preferably applied in combination therewith, the said surface profile comprises a cavity or a row of cavities having a long axis that is oriented transversely or axially width-wise relative to the peripheral direction of the ring and/or in parallel with such peripheral direction. Preferably, this cavity or row of cavities is repeated in the peripheral direction such that, as seen in the peripheral direction, each consecutive cavity or row of cavities is identical to a respectively preceding or succeeding cavity or row of cavities and is equally spaced. Thus, defined alternatively, the surface profile of the ring is provided with continuous ridges that have their long axis oriented transversely to the peripheral direction and that span the entire dimension of the ring in that direction and/or with continuous ridges that are oriented in parallel with that peripheral direction.

The basic principle of the invention will now be elucidated by way of specific, exemplary embodiments, along a drawing in which:
Figure 1 provides a schematically depicted example of the well-known continuously variable transmission provided with a drive belt,
Figure 2 is a section of the drive belt shown in perspective,
Figure 3 is a schematic view of a known surface profile for a drive belt ring component (reproduced from EP-A-1 371 876),
Figure 4 is a schematic view of a surface profile for a drive belt ring component in accordance with the invention,
Figure 5 is a schematic view of a further example of a surface profile for a drive belt ring component in accordance with the invention, and
Figure 6 is a schematic view of a final example of a surface profile for a drive belt ring component in accordance with the invention

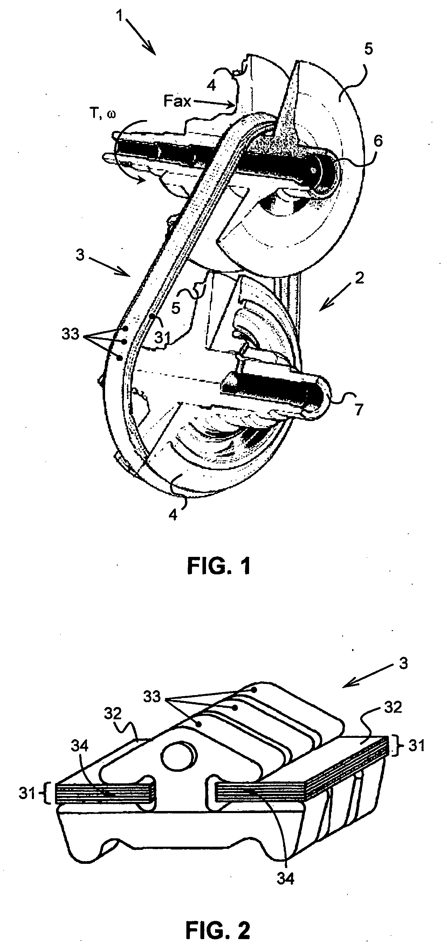

Figure 1 shows the central parts of a known continuously variable transmission or CVT that is commonly applied in the drive line of motor vehicles between the engine and the drive wheels thereof. The transmission comprises two pulleys 1, 2, each provided with two conical pulley discs 4, 5, where between a predominantly V-shaped pulley groove is defined and whereof one disc 4 is axially moveable along a respective pulley shaft 6, 7 over which it is placed. A drive belt 3 is wrapped around the pulleys 1, 2 for transmitting a rotational movement w and an accompanying torque T from the one pulley 1, 2 to the other 2, 1. The transmission generally also comprises activation means that impose on the said at least one disc 4 an axially oriented clamping force Fax directed towards the respective other pulley disc 5 such that the belt 3 is clamped there between. Also, a (speed) ratio of the transmission between the rotational speed of the driven pulley 2 and the rotational speed of the driving pulley 1 is determined thereby.

An example of a known drive belt 3 is shown in more detail figure 2 in a section thereof, which belt 3 incorporates an endless carrier 31. The endless carrier 31 is shown only in part and -in this example- is composed of two sets of thin and flat, i.e. band-like, flexible metal rings 32. The belt 3 further comprises a multitude of plate-like metal segments or transverse elements 33, whereof only three are shown. The transverse elements 33 are held together by the endless carrier 31 that is located in a recess 34 of the transverse elements 33. The transverse elements 33 take-up the said clamping force F such that, when an input torque T is exerted on the so-called driving pulley 1, friction between the discs 4, 5 and the belt 3, causes a rotation of the driving pulley 1 to be transferred to the so-called driven pulley 2 via the likewise rotating drive belt 3.

During operation in the CVT the drive belt 3 and in particular the rings 32 thereof is/are tensioned and, moreover, rotated. Typically, each consecutive ring 32 of the endless carrier 31 operates at a slightly different speed ratio between the pulleys 1, 2, due to the difference in the ratio between the radial positions of each ring 32 at the pulleys 1, 2. As a result, each ring 32 of the endless carrier 31 typically rotates at a slight different speed and a relative movement or travel, i.e. ring slip, occurs between the pairs of adjoining rings 32 of the endless carrier 31, which ring slip results in friction and friction losses.

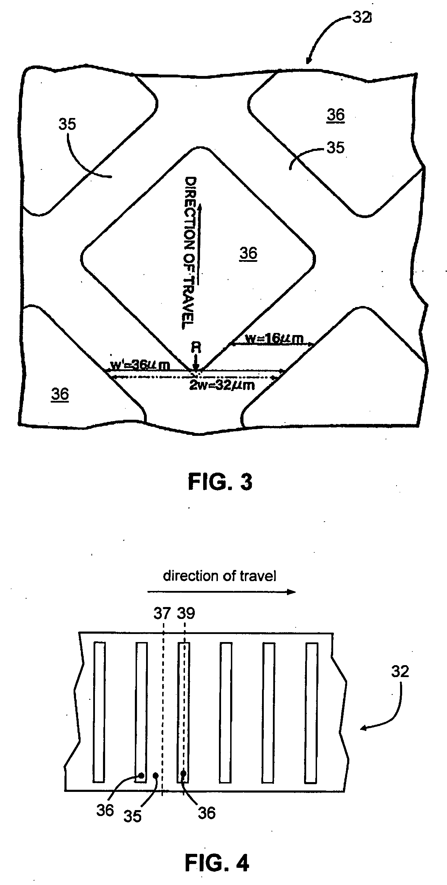

To reduce the friction between the rings 32, at least one of the radially inward and radially outward oriented main faces of the ring 32, i.e. the inner and/or the outer peripheral surface thereof, is provided with a surface profile 35, 36. In figure 3 an example of the known surface profile 35, 36 is shown that is composed of mutually intersecting protruding ridges 35 forming a continuous, meshed pattern. Between the ridges 35 a plurality of isolated, lower lying cavities 36 are formed. By the provision of the ridges 35 and cavities 36, on the one hand the contact area between the adjoining rings 32 of the endless carrier 31 is reduced and, on the other hand, spaces are provided for the accommodation of lubrication oil and wear particles. The known ridges 35 are oriented at an acute angle relative to the direction of travel during operation, i.e. the peripheral direction of the ring 32 relative to an adjoining ring 32 in the endless carrier 31. In the known surface profile 35, 36 of figure 3, the cavities 36 make up around 56% of the total, radially oriented surface area of the ring 32, i.e. which total surface area further includes the projected surface area of around 44% of the ridges 35.

The present invention concerns a similar surface profile 35, 36, i.e. a surface profile 35, 36 that is provided with individual, i.e. isolated cavities 36 that are surrounded by an effectively continuous higher lying part 35 of the main face 34 of the rings 32, which is formed by mutually intersecting ridges 35. A first example of the surface profile 35, 36 according to the present invention is illustrated schematically in figure 4 (not to scale). In this specific example of the invention the cavities 36 constitute approximately 22.5% of the total, radially oriented surface area of the ring 32. As a result, the friction between and/or wear of the rings 32 of the endless carrier 31 could be favourably reduced.

The surface profile 35, 36 of figure 4 also illustrates a further feature of the invention that may be applied alternative or in addition to the above-mentioned feature. According to the invention, the surface profile 35, 36 of the ring 32 is constituted by consecutive cavities 36, whereof each cavity 36 is defined with a long axis 37 that is oriented transversely or axially width-wise relative to the direction of travel of the ring 32. Each cavity 36 largely, but not entirely, spans the transverse dimension of the ring 32 and, as seen in the direction of travel of the ring 32, is separated from a consecutive cavity 36 by a continuous ridge 35 having a long axis 37 that is likewise oriented transversely to the to the direction of travel.

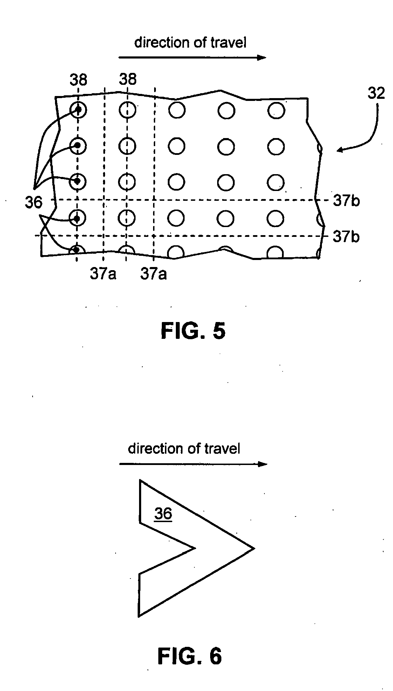

As is schematically illustrated in figure 5, the surface profile 35, 36 may alternatively be provided with consecutive rows 39 of, in this example, circular cavities 36, each row 39 of cavities 36 having a long axis 38 that is oriented transversely to the direction of travel of the ring 32, which consecutive rows 39 of cavities 36 are intersected by two sets 37a, 37b of continuous ridges 37a, 37b, whereof a first set 37a has a long axis oriented transversely to the direction of travel and whereof a second set 37b has a long axis oriented in parallel therewith.

Finally, in figure 6 a preferred shape for the cavities 36 is shown that is particularly suited to the present invention. According to the invention the cavities 36 of the surface profile 36, 37 of the rings 32 are preferably chevron- or V-shaped, sharp ends pointing in a direction of (main) movement relative to an adjoining ring 32 in the endless carrier 31. By this, so-called, directional shape of the cavities 36, the friction between the rings 32 of the endless carrier 31 could be reduced even further.

## Claims

1. Drive belt (3) with transverse elements (33) and at least one endless carrier (31) that is provided in an recess (37) of the transverse elements (33) and that is composed of a number of, mutually radially nested, flexible metal rings (32) that can slide both relative to one another and relative to the transverse elements (33) and whereof at least one flexible metal ring (32) is provided with a predominantly radially outward oriented peripheral surface and with a predominantly radially inward oriented peripheral surface, whereof at least one peripheral surface is provided with a surface profile (35, 36) with a higher lying part (35) of the peripheral surface that confines a number of isolated and lower lying parts (36) of the surface profile (35, 36), **characterized in that** the higher lying part (35) of the outer surface profile (35, 36) includes continuous ridges (35) that have their long axis (37; 37a) oriented transversely to the peripheral direction and that span the entire dimension of the ring **in that** direction which ridges (35) separate consecutive lower lying parts (36) of isolated and lower lying parts (36) of the surface profile (35, 36) of the one peripheral surface having a long axis (3g) oriented perpendicular to the peripheral direction of the ring (32).

2. Drive belt (3) according to claim 1, **characterized in that**, the isolated and lower lying parts (36) of the surface profile (35, 36) are shaped predominantly rectangular with a long axis (39) that is oriented perpendicular to the peripheral direction of the ring (32).

3. Drive belt (3) according to claim 1, **characterized in that**, the isolated and lower lying parts (36) of the surface profile (35, 36) are shaped circular.

4. Drive belt (3) according to claim 1, **characterized in that**, the isolated and lower lying parts (36) of the surface profile (35, 36) are predominantly V-shaped.

5. Drive belt (3) according to a preceding claim, **characterized in that**, the isolated and lower lying parts (36) of the surface profile (35,36) of the one peripheral surface compose at least 5% and at most 30% of an overall surface area of that one peripheral surface.

6. Drive belt (3) according to a preceding claim, **characterized in that** the isolated and lower lying parts (36) of the surface profile (35, 36) of the one peripheral surface compose at least 10% and at most 20% of an overall surface area of that one peripheral surface.

7. Drive belt (3) according to a preceding claim, **characterized in that** the isolated and lower lying parts (36) of the surface profile (35, 36) of the one peripheral surface are provided with a dimension of at least 25 µm and at most 250 µm in the peripheral direction of the ring (32).

8. Drive belt (3) according to a preceding claim, **characterized in that** the isolated and lower lying parts (36) of the surface profile (35, 36) of the one peripheral surface are provided with a dimension of at least 50 µm and at most 150 µm in the peripheral direction of the ring (32).

9. Drive belt (3) according to a preceding claim, **characterized in that** the isolated and lower lying parts (36) of the surface profile (35, 36) of the one peripheral surface are located at least 2.5 µm and at most 25 µm below the higher lying part (35) thereof in the radial direction of the ring (32).

10. Drive belt (3) according to a preceding claim, **characterized in that** the isolated and lower lying parts (36) of the surface profile (35, 36) of the one peripheral surface are located at least 4.5 µm and at most 10 µm below the higher lying part (35) thereof in the radial direction of the ring (32).

## Patentansprüche

1. Treibriemen (3) mit Querelementen (33) und mindestens einem endlosen Träger (31), der in einer Vertiefung (37) der Querelemente (33) bereitgestellt ist und aus einer Anzahl von miteinander radial verschachtelten, flexiblen Metallringen (32) besteht, die beide in Bezug aufeinander in Bezug auf die Querelemente (33) gleiten können und
wobei mindestens ein flexibler Metallring (32) mit einer vornehmlich radial nach außen gerichteten Umfangsoberfläche und mit einer vornehmlich nach innen gerichteten Umfangsoberfläche bereitgestellt ist,
wobei mindestens eine Umfangsoberfläche mit einem Oberflächenprofil (35, 36) mit einem höher liegenden Teil (35) der Umfangsoberfläche bereitgestellt ist, das eine Anzahl von isolierten und tiefer liegenden Teilen (36) des Oberflächenprofils (35, 36) begrenzt,
**dadurch gekennzeichnet, dass** der höher liegende Teil (35) des äußeren Oberflächenprofils (35, 36) durchgehende Rippen (35) aufweist, welche diese lange Achse (37; 37a) aufweisen, die quer zur Umfangsrichtung ausgerichtet ist und die vollständige Abmessung des Rings in dem Abschnitt umfasst, und dadurch, dass die Rippen (35) separat aufeinander folgende tiefer liegende Teile (36) isolierter und tiefer liegender Teile (36) des Oberflächenprofils (35, 36) der einen Umfangsoberfläche trennen, die eine lange Achse (39) aufweist, die senkrecht zu der Umfangsrichtung des Rings (32) ausgerichtet ist.

2. Treibriemen (3) nach Anspruch 1, **dadurch gekennzeichnet, dass** die isolierten tiefer liegenden Teile (36) des Oberflächenprofils (35, 36) vornehmlich rechteckig geformt sind und eine lange Achse (39) aufweisen, die senkrecht zu der Umfangsrichtung des Rings (32) ausgerichtet ist.

3. Treibriemen (3) nach Anspruch 1, **dadurch gekennzeichnet, dass** die isolierten und tiefer liegenden Teile (36) des Oberflächenprofils (35, 36) rund ausgebildet sind.

4. Treibriemen (3) nach Anspruch 1, **dadurch gekennzeichnet, dass** die isolierten und tiefer liegenden Teile (36) des Oberflächenprofils (35, 36) vornehmlich V-förmig ausgebildet sind.

5. Treibriemen (3) nach einem der vorhergehenden Ansprüche, **dadurch gekennzeichnet, dass** die isolierten und tiefer liegenden Teile (36) des Oberflächenprofils (35,36) der einen Umfangsoberfläche mindestens 5% und höchstens 30% des Gesamtoberflächenbereichs der einen Umfangsoberfläche ausmachen.

6. Treibriemen (3) nach einem der vorhergehenden Ansprüche, **dadurch gekennzeichnet, dass** die isolierten und tiefer liegenden Teile (35, 36) des Oberflächenprofils (36) der einen Umfangsoberfläche mindestens 10% und höchstens 20% des Gesamtoberflächenbereichs der einen Umfangsoberfläche ausmachen.

7. Treibriemen (3) nach einem der vorhergehenden Ansprüche, **dadurch gekennzeichnet, dass** die isolierten und tiefer liegenden Teile (36) des Oberflächenprofils (35, 36) der einen Umfangsoberfläche mit einer Abmessung von mindestens 25 µm und höchstens 250 µm in Umfangsrichtung des Rings (32) bereitgestellt sind.

8. Treibriemen (3) nach einem der vorhergehenden Ansprüche, **dadurch gekennzeichnet, dass** die isolierten und tiefer liegenden Teile (36) des Oberflächenprofils (35, 36) der einen Umfangsoberfläche mit einer Abmessung von mindestens 50 µm und höchstens 150 µm in Umfangsrichtung des Rings (32) bereitgestellt sind.

9. Treibriemen (3) nach einem der vorhergehenden Ansprüche, **dadurch gekennzeichnet, dass** die isolierten und tiefer liegenden Teile (36) des Oberflächenprofils (35, 36) der einen Umfangsoberfläche mindestens 2,5 µm und höchstens 25 µm unter dem höher liegenden Teil (35) davon in radialer Richtung des Rings (32) angeordnet sind.

10. Treibriemen (3) nach einem der vorhergehenden Ansprüche, **dadurch gekennzeichnet, dass** die isolierten und tiefer liegenden Teile (36) des Oberflächenprofils (35, 36) der einen Umfangsoberfläche mindestens 4,5 µm und höchstens 10 µm unter dem höher liegenden Teil (35) davon in radialer Richtung des Rings (32) angeordnet sind.

## Revendications

1. Courroie d'entraînement (3) avec des éléments transversaux (33) et au moins un support sans fin (31) prévu dans un renfoncement (37) des éléments transversaux (33) et composé d'un nombre de bagues métalliques (32) flexibles mutuellement imbriquées dans le plan radial pouvant coulisser tant l'une par rapport à l'autre et par rapport aux éléments transversaux (33) et dont au moins une bague métallique flexible (32) est pourvue d'une surface périphérique orientée vers l'extérieur de façon prédominante dans le plan radial et avec une surface périphérique orientée vers l'intérieur de façon prédominante dans le plan radial, dont au moins une surface périphérique est pourvue d'un profil de surface (35, 36) avec une partie posée supérieure (35) de la surface périphérique confinant un nombre de parties posées isolées et inférieures (36) du profil de surface (35, 36), **caractérisée en ce que** la partie posée supérieure (35) du profil de surface extérieure (35, 36) comprend des nervures continues (35) ayant cet axe long (37 ; 37a) orienté transversalement à la direction périphérique et recouvrant toute la dimension de la bague dans cette direction, lesdites nervures (35) séparant les parties posées (36) inférieures consécutives si elles sont tournées et les parties posées (36) inférieures du profil de surface (35, 36) d'une surface périphérique ayant un axe long (39) orienté perpendiculairement à la direction périphérique de la bague (32).

2. Courroie d'entraînement (3) selon la revendication 1, **caractérisée en ce que** les parties posées isolées et inférieures (36) du profil de surface (35, 36) prennent une forme prédominante rectangulaire avec un axe long (39) orienté perpendiculairement à la direction périphérique de la bague (32).

3. Courroie d'entraînement (3) selon la revendication 1, **caractérisée en ce que** les parties posées isolées et inférieures (36) du profil de surface (35, 36) prennent une forme circulaire.

4. Courroie d'entraînement (3) selon la revendication 1, **caractérisée en ce que** les parties posées isolées et inférieures (36) du profil de surface (35, 36) prennent de façon prédominante une forme de V.

5. Courroie d'entraînement (3) selon une revendication précédente, **caractérisée en ce que** les parties posées isolées et inférieures (36) du profil de surface (35,36) d'une surface périphérique composent au moins 5 % et tout au plus 30 % d'une superficie d'ensemble de la surface périphérique.

6. Courroie d'entraînement (3) selon une revendication précédente, **caractérisée en ce que** les parties posées isolées et inférieures (36) du profil de surface (35, 36) d'une surface périphérique composent au moins 10 % et tout au plus 20 % d'une superficie d'ensemble de la surface périphérique.

7. Courroie d'entraînement (3) selon une revendication précédente, **caractérisée en ce que** les parties posées isolées et inférieures (36) du profil de surface (35, 36) d'une surface périphérique sont pourvues d'une dimension d'au moins 25 µm et de tout au plus 250 µm dans la direction périphérique de la bague (32) .

8. Courroie d'entraînement (3) selon une revendication précédente, **caractérisée en ce que** les parties posées isolées et inférieures (36) du profil de surface (35, 36) de la surface périphérique sont pourvues d'une dimension d'au moins 50 µm et de tout au plus 150 µm dans la direction périphérique de la bague (32).

9. Courroie d'entraînement (3) selon une revendication précédente, **caractérisée en ce que** les parties posées isolées et inférieures (36) du profil de surface (35, 36) de la surface périphérique sont positionnées au moins 2,5 µm et tout au plus 25 µm en dessous de la partie posée supérieure (35) correspondante dans la direction radiale de la bague (32).

10. Courroie d'entraînement (3) selon une revendication précédente, **caractérisée en ce que** les parties posées isolées et inférieures (36) du profil de surface (35, 36) de la surface périphérique sont positionnées au moins 4,5 µm et tout au plus 10 µm en dessous de la partie posée supérieure (35) correspondante dans la direction radiale de la bague (32).
